# EUROPÄISCHE PATENTSCHRIFT

(11) **EP 4 056 759 B1**
(45) Veröffentlichungstag und Bekanntmachung des Hinweises auf die Patenterteilung: **14.08.2024**
(21) Anmeldenummer: 21161432.6
(22) Anmeldetag: 09.03.2021
(51) Int. Cl.: E01C 19/48

(54) **STRASSENFERTIGER MIT ABSAUGEINRICHTUNG**
ROAD FINISHER WITH SUCTION DEVICE
FINISSEUSE DE ROUTE POURVU DE DISPOSITIF D'ASPIRATION

(43) Veröffentlichungstag der Anmeldung: 14.09.2022
(73) Patentinhaber: Joseph Vögele AG, 67067 Ludwigshafen (DE)
(72) Erfinder: BUSCHMANN, Martin, 67435 Neustadt (DE); WEISER, Ralf, 68526 Ladenburg (DE); MUNZ, Roman, 67435 Neustadt (DE)
(74) Vertreter: Grünecker Patent- und Rechtsanwälte PartG mbB

(56) Entgegenhaltungen:
- EP-A1- 0 666 373
- DE-A1- 102012 011 693
- JP-A- 2014 139 388
- JP-A- 2017 095 907

## Beschreibung

Die vorliegende Erfindung betrifft einen Straßenfertiger gemäß dem Anspruch 1.

Straßenfertiger werden in der Praxis zur Herstellung von bitumenhaltigen Straßenbelägen eingesetzt. Beim Einbau von bituminös gebundenem Straßenbaumaterial entstehen aufgrund der hohen Verarbeitungstemperaturen bitumenhaltige Aerosole, die die Luftqualität in der Umgebung des Straßenfertigers beeinflussen. An bekannten Straßenfertigern werden daher Absaugsysteme zum Absaugen der Aerosole verwendet, um zu verhindern, dass eine Aerosolkonzentration in der Luft einen kritischen Wert erreicht.

Bei bekannten Absaugsystemen werden die Aerosole typischerweise nahe der Maschinenmitte abgesaugt, d.h. zentral am Ausgang eines Kratzerbands, das das Einbaumaterial aus dem Gutbunker des Straßenfertigers zu dessen Einbaubohle transportiert. Am Ausgang des Kratzerbands wird das Einbaumaterial vom Kratzerbandende in einen Querverteilerbereich abgeworfen und mittels einer darin angeordneten Querverteilerschnecke vor der Einbaubohle des Straßenfertigers verteilt. Beim Querverteilen des Einbaumaterials bis zu den jeweiligen Außenseiten der Einbaubohle kommt es allerdings auch dann noch zu einer Aerosolbildung, nachdem das Einbaumaterial den Bereich unterhalb des Kratzerbands seitwärts verlassen hat. Die entlang der äußeren Abschnitte der Einbaubohle entstehenden Aerosole werden jedoch durch herkömmliche, zentral angeordnete Absaugsysteme nicht mehr ausreichend erfasst.

EP 0 843 044 A1 offenbart einen Straßenfertiger mit einem Ventilationssystem zum Absaugen von Aerosolen, insbesondere aufsteigender Dämpfe, aus einem Bereich oberhalb des Querverteilersystems. Die dafür eingesetzte Absaugvorrichtung besteht insbesondere aus einem Absaugvorrichtungsteil, das den Schneckenraum zumindest nach oben abdeckt und sich ggf. seitlich bis zu an der Einbaubohle vorgesehenen, ausfahrbaren Ausziehteilen erstreckt. Problematisch bei dieser Absaugvorrichtung ist, dass die Sicht des Bohlenbedieners in den Bereich der Materialquerverteilung stark eingeschränkt ist. Außerdem ist die Montage dieser Absaugvorrichtung aufwändig, vor allem dann, wenn an der Einbaubohle Ausziehteile und/oder seitliche Bohlenanbauteile zum Verbreitern der Einbaubreite eingesetzt werden.

DE 10 2012 011 693 A1 offenbart einen Straßenfertiger mit einer Dampfabsaugung, die eingangsseitig konfusorartige Eintrittsdüsen aufweist, welche auf einem Grundbohlenkörper einer Ausziehbohle montiert sind.

EP 0 666 373 A1 offenbart eine Dampfabsaugung mit einer eingangsseitig positionierten Abdeckhaube, die sich zwischen Zugholmen der Einbaubohle, oberhalb eines Querverteilers erstreckt, um vorderhalb des Grundbohlenkörpers aufsteigende Dämpfe einzusammeln, welche mittels einer durch den Motorraum des Straßenfertigers geführten Absaugleitung aus der Abdeckung abgesaugt werden. Für seitliche Ausziehteile der Einbaubohle wird eine ausziehbare Plane als Abdeckung offenbart.

JP 2014-139388 A offenbart einen Straßenfertiger mit einer Absaugeinrichtung, an deren Eingang eine Abdeckhaube positioniert wird, welche sich oberhalb des Querverteilers zwischen Zugholmen der Einbaubohle erstreckt.

JP 2017-095907 A offenbart einen Sprühfertiger mit einer Sprüheinrichtung, die vor einem Querverteiler positioniert ist und welcher ein Absaugsystem zugeordnet ist.

Aufgabe der Erfindung ist es, einen Straßenfertiger mit einer Absaugeinrichtung zur Verfügung zu stellen, wodurch sich die zuvor im Zusammenhang mit dem Stand der Technik beschriebenen Nachteile reduzieren lassen, wodurch insbesondere ein kosten- sowie platzbedarfsreduzierter Aufbau geschaffen wird, womit einer Ausbreitung von bei der Materialquerverteilung entstehenden Dämpfen besser entgegengewirkt werden kann.

Diese Aufgabe wird gelöst anhand eines Straßenfertigers gemäß dem Anspruch 1. Vorteilhafte Weiterbildungen der Erfindung sind durch die technischen Merkmale der jeweiligen Unteransprüche gegeben.

Die vorliegende Erfindung bezieht sich auf einen Straßenfertiger, der eine Einbaubohle zum Herstellen einer Einbauschicht aus einem Einbaumaterial, insbesondere zum Herstellen einer Einbauschicht aus einem bituminös gebundenen Einbaumaterial, umfasst. Der erfindungsgemäße Straßenfertiger weist ferner einen Gutbunker zur Aufnahme des Einbaumaterials sowie eine Längsfördervorrichtung auf, die dazu ausgebildet ist, das Einbaumaterial aus dem Gutbunker entgegen einer Fahrtrichtung des Straßenfertigers zur Einbaubohle zu transportieren.

Weiter umfasst der erfindungsgemäße Straßenfertiger mindestens eine Querverteilerschnecke, die dazu ausgebildet ist, das mittels der Längsfördervorrichtung zur Einbaubohle transportierte Einbaumaterial quer zur Fahrtrichtung vor der Einbaubohle zu verteilen. Die Querverteilerschnecke ist in Fahrtrichtung vor einem Bohlengrundkörper der Einbaubohle gelagert, vorzugsweise auch innerhalb eines optional zur Querverteilung des Einbaumaterials vor der Einbaubohle eingerichteten Querverteilerkanals, der zumindest abschnittsweise mittels an einem Chassis des Stra-ßenfertigers abgestützten Kanalblechen und mittels seitlich des Bohlengrundkörpers der Einbaubohle befestigten Vorabstreifern quer zur Fahrtrichtung vor der Einbaubohle ausgebildet ist.

Außerdem weist der erfindungsgemäße Straßenfertiger mindestens eine Absaugeinrichtung mit mindestens einer daran eingangsseitig ausgebildeten Ansaugleitung auf, die dazu konfiguriert ist, bei der Querverteilung des Einbaumaterials entstehende Aerosole, aus Bereichen entlang des Querverteilerkanals, abzusaugen. Vor allem lassen sich damit Aerosole aus äußeren Bereichen des Querverteilerkanals absaugen.

Erfindungsgemäß ist die Ansaugleitung zumindest abschnittsweise an den Kanalblechen des Querverteilerkanals und/oder zumindest abschnittsweise an den Vorabstreifern des Querverteilerkanals abgeordnet. Vorzugsweise ist die Ansaugleitung zumindest abschnittsweise an einer der Querverteilerschnecke zugewandten Vorderseite des Bohlengrundkörpers und/oder zumindest abschnittsweise an einem Außenbedienstand der Einbaubohle angeordnet.

In anderen Worten kommen bei der Erfindung die Kanalbleche und/oder die Vorabstreifer als Basis zur Anbringung der Ansaugleitung zum Einsatz. Optional kommen der Bohlengrundkörper und/oder der Außenbedienstand der Einbaubohle als Basis zur Anbringung der Ansaugleitung zum Einsatz. Die erfindungsgemäße Ansaugleitung ist somit direkt an einem ohnehin vorhandenen Bohlenteil der Einbaubohle, erfindungsgemäß an einer Komponente des vor ihr errichteten Querverteilerkanals angeordnet.

Dadurch ergeben sich durch den erfindungsgemäßen Straßenfertiger, insbesondere aufgrund des daran erfindungsgemäß eingesetzten Absaugsystems, mehrere praxisrelevante Vorteile. Einerseits lässt sich dadurch die Absaugeinrichtung ohne großen Aufwand montieren, da deren Ansaugleitung direkt an Strukturen der Einbaubohle angebaut ist. Ferner bietet die Erfindung die Möglichkeit, die Absaugeinrichtung kompakt am Straßenfertiger zu installieren. Insgesamt ist die Absaugeinrichtung auch im Vergleich zu herkömmlichen Lösungen aufgrund ihrer reduzierten Bauweise kostengünstiger herstellbar. Ebenfalls ist die Absaugeinrichtung flexibel an eine gewünschte Arbeitsbreite anpassbar. Dadurch, dass die Ansaugleitung direkt an den Kanalblechen und/oder an den Vorabstreifern angeordnet ist, optional am Außenbedienstand, insbesondere an einer für dessen Aufbau eingesetzten Komponente, z.B. an einem Seitenschieber, und/oder optional am Bohlengrundkörper, verläuft sie in unmittelbarer Nähe des vor der Einbaubohle quergeförderten Einbaumaterials, sodass die Absaugung von Aerosolen entlang der Ansaugleitung besonders effektiv durchführbar ist.

Vorzugsweise ist die Ansaugleitung zumindest abschnittsweise an einer der Querverteilerschnecke zugewandten Seite der Kanalbleche des Querverteilerkanals und/oder zumindest abschnittsweise an einer der Querverteilerschnecke zugewandten Seite der Vorabstreifer des Querverteilerkanals angeordnet.

Vorstellbar wäre es, dass der Straßenfertiger eine erste Absaugeinrichtung aufweist, die die Ansaugleitung für die Kanalbleche, die Vorabstreifer und/oder die Vorderseite des Bohlengrundkörpers umfasst, und/oder eine zweite Absaugeinrichtung aufweist, die die Ansaugleitung des Au-ßenbedienstands umfasst. Die beiden Absaugeinrichtungen können vorzugsweise unabhängig voneinander angesteuert werden.

Vorzugsweise ist die Ansaugleitung eine sich quer zur Fahrtrichtung erstreckende Rohrleitung. Es wäre vorstellbar, dass die Rohrleitung einen runden Rohrleitungsquerschnitt aufweist, wobei auch andere Querschnittsgeometrien denkbar sind. In Form einer Rohrleitung ist die Ansaugleitung am Kanalblech, am Vorabstreifer, am Bohlengrundkörper und/oder am Außenbedienstand kompakt ausgebildet, sodass die Querverteilung des Einbaumaterials über die gesamte eingestellte Einbaubreite von einem Bohlenbediener gut einsehbar bleibt, und zwar unabhängig davon, auf welcher Seite der Einbaubohle er sich befindet. Die Rohrleitung kann einen Innenrohrdurchmesser von wenigen Zentimetern, beispielsweise von zirka 5 bis 10 cm, aufweisen. Gemäß einer Ausführungsform der Erfindung ist die Ansaugleitung zumindest abschnittsweise in Form eines Vierkantrohrs ausgebildet. Anhand dieser Bauteilgeometrie kann die Ansaugleitung besonders stabil am Kanalblech, am Vorabstreifer, am Bohlengrundkörper und/oder am Außenbedienplatz befestigt werden. Hinzu kommt, dass die Ansaugleitung in Form eines Vierkantrohrs auch den anderen, sie tragenden Geometrien, vor allen Dingen den für sie als Basis eingesetzten Aufbauten des Querverteilerkanals, eine sehr robuste Bauweise verschafft.

Unabhängig davon, in welcher Form die Ansaugleitung als solche vorliegt, kann die Ansaugleitung entweder in Fahrtrichtung vordergründig oder hintergründig zu der Seite der sie tragenden Komponente angeordnet sein. Damit ist gemeint, dass die Ansaugleitung entweder als strukturell sichtbarer Leitungsabschnitt außen entlang der Kanalbleche, der Vorabstreifer, des Bohlengrundkörpers und/oder am Außenbedienstands, insbesondere entlang eines Seitenschieberträgers des Seitenschiebers, oder darin integriert ausgebildet ist, wodurch für den Betrachter lediglich Ansaugöffnungen an diesen Aufbauten sichtbar sind. Bei der letztgenannten Ausführung würde die Ansaugleitung somit unsichtbar, innerhalb des Aufbaus der Kanalbleche, der Vorabstreifer, des Bohlengrundkörpers und/oder des Seitenschieberträgers verlaufen. Damit ist die Ansaugleitung hervorragend geschützt gelagert und gestattet dem Bohlenbediener eine uneingeschränkte Sicht auf die Materialquerverteilung.

Vorzugsweise ist die Ansaugleitung aus einem korrosionsbeständigen Metall ausgebildet. Insbesondere ist die Ansaugleitung aus einem Leichtmetall, beispielsweise aus Aluminium, hergestellt, um das Verbreitern der Einbaubohle zu erleichtern. Vorstellbar ist es, dass die Ansaugleitung aus dem Material des für sie eingesetzten Trägerbauteils hergestellt ist, sprich aus dem Material der Kanalbleche, der Vorabstreifer und/oder der Vorderseite des Bohlengrundkörpers, sodass die Ansaugleitung optisch unauffällig ausgebildet ist.

Insbesondere ist die Ansaugleitung in Form einer Ansaugschiene ausgebildet. Diese kann besonders kompakt am Bohlenaufbau und an daran ausgebildeten Anbauten integriert werden. Es ist vorstellbar, dass sich die Ansaugschiene entlang der gesamten Breite des eingerichteten Querverteilerkanals erstreckt. Damit lassen sich Aerosole über die gesamte Breite des Querverteilerkanals, insbesondere bis hin zu den Außenseiten der Einbaubohle, hervorragend absaugen.

Eine besonders kompakte Bauweise kann sich dadurch ergeben, dass die Ansaugleitung eine Wand aufweist, die zumindest abschnittsweise als integraler Bestandteil der Kanalbleche, der Vorabstreifer, der Vorderseite des Bohlengrundkörpers und/oder einer Komponente des Außenbedienstands, z.B. des Seitenschieberträgers, ausgebildet ist. Die Ansaugleitung kann gemäß dieser Variante an der jeweiligen Trägerseite der Kanalbleche, der Vorabstreifer, der Komponente des Außenbedienstands und/oder des Bohlengrundkörpers, sei es in Fahrtrichtung vordergründig oder hintergründig, formintegriert ausgebildet sein. Damit lässt sich die kompakte Bauweise der Ansaugleitung noch weiter verbessern. Am Außenbedienstand könnte die Ansaugleitung als Teil des Seitenschieberträgers, insbesondere darin integriert, ausgebildet sein.

Vorzugsweise ist die Ansaugleitung zumindest abschnittsweise entlang einer oberen Kante der Kanalbleche, entlang einer oberen Kante der Vorabstreifer und/oder entlang eines oberen Kante eines Seitenschieberträgers des Außenbedienstands ausgebildet. Damit verläuft die Ansaugleitung unmittelbar entlang einer oberen Begrenzung des Querverteilerkanals, sodass darin entstehende Aerosole bzw. Dämpfe gleich an deren Entstehungsort besser absaugbar sind. Hinzu kommt, dass eine Anordnung an der jeweiligen oberen Kante der Kanalbleche und/oder der Vorabstreifer eine nützliche Ausrichthilfe für den Zusammenbau des Querverteilerkanals sein kann. Auch entlang der oberen Kante der Trägerkomponente kann die Ansaugleitung in Fahrtrichtung entweder vorderseitig, sprich als daran ausgebildeter Anbau, oder daran integriert, sprich im Innenaufbau der Trägerkomponente ausgebildet sein.

Insbesondere ist die an der Vorderseite des Grundbohlenkörpers, am Außenbedienstand, an den Kanalblechen und/oder an den Vorabstreifern ausgebildete Ansaugleitung derart dimensioniert, dass der Querverteilerkanal von oben betrachtet im Wesentlichen unbedeckt bleibt. Damit ist gemeint, dass die Ansaugleitung in Fahrtrichtung wesentlich kleiner dimensioniert ist als der Querverteilerkanal, sodass ein Bediener den innerhalb des Querverteilerkanals seitwärts geförderten Materialfluss während eines Einbaubetriebs des Straßenfertigers hervorragend beobachten kann. Vorzugsweise bildet die Ansaugleitung entlang des Querverteilerkanals eine quer zur Fahrtrichtung eingerichtete Abluftführung für die abgesaugten Aerosole aus. Die Abluftführung kann zu Außenseiten der Einbaubohle und/oder zur Mitte der Einbaubohle hin verlaufen. Entlang der Abluftführung kann die Ansaugleitung mehrere Ansaugöffnungen aufweisen, sodass die innerhalb der Abluftführung geförderte Abluftströmung aus mehreren Ansaugströmen gebildet ist. Vorteilhaft ist es, wenn die Ansaugleitung mehrere miteinander verbindbare, vorzugsweise quer zur Fahrtrichtung in Reihe angeordnete, Leitungsabschnitte aufweist, deren Koppelenden im Bereich von Trennstellen nebeneinander befestigter Kanalbleche und/oder nebeneinander befestigter Vorabstreifer ausgebildet sind. Vorzugsweise sind die Kanalbleche und/oder die Vorabstreifer, einschließlich der daran ausgebildeten Ansaugleitung, werkzeuglos, d.h. ohne weitere Hilfsmittel, zusammenbaubar. Dies vereinfacht deren Montage auf der Baustelle.

Denkbar wäre es, dass die Absaugeinrichtung, zumindest jedoch einzelne Komponenten davon, als Nachrüstset erhältlich ist, um am Straßenfertiger angeordnet zu werden Möglich ist es, dass benachbarte Kanalbleche und/oder Vorabstreifer anhand der Koppelenden der Ansaugleitung aneinandergebaut sind. Für den Aufbau der Kanalbleche und/oder der Vorabstreifer liegen bei dieser Variante die Koppelenden der Ansaugleitung als Befestigungsmittel vor, wodurch der Zusammenbau für den Bediener insgesamt noch einfacher wird. Vorstellbar ist es, dass die Koppelenden der Ansaugleitung benachbarter Kanalbleche und/oder Vorabstreifer abschnittsweise ineinander schiebbar sind, wodurch ein Überlapp zwischen den Koppelenden entsteht.

Gemäß einer Variante sind die Kanalbleche und/oder die Vorabstreifer automatisch hinsichtlich einer eingestellten Einbaubreite quer zur Fahrtrichtung verfahrbar. Daran angebaute Ansaugleitungen können insbesondere teleskopierbar ausgebildet sein, damit sich die Ansaugleitungen entsprechend einer Erstreckung des Querverteilerkanals automatisch anpassen können.

Vorzugweise weist die Ansaugleitung mehrere Durchbrüche als Ansaugöffnungen auf. Die Ansaugöffnungen können zumindest abschnittsweise entlang der Ansaugleitung bis zu den Außenseiten der Einbaubohle ausgebildet sein. Die Durchbrüche können insbesondere die Form eines Schlitzes haben. Entlang der Ansaugleitung können mehrere parallel verlaufende Schlitze zumindest abschnittsweise gruppiert oder durchlaufend ausgebildet sein.

Gemäß einer Ausführungsform weist die Ansaugleitung mindestens einen Schließmechanismus zum Öffnen und Schließen zumindest einer der daran ausgebildeten Ansaugöffnungen auf. Vorstellbar ist es, dass mittels des Schließmechanismus zum gezielten Absaugen von Aerosolen im Bereich eines Außenbedienstands der Einbaubohle die daran angrenzenden Ansaugöffnungen geöffnet eingestellt werden, während andere, weiter zur Mitte des Bohlenaufbaus hin verlagerte Ansaugöffnungen der Ansaugleitung mittels des Schließmechanismus wahlweise geschlossen werden, sodass im Bereich des Außenbedienstands ein stärkerer Saugeffekt entsteht.

Gemäß einer Variante der Erfindung sind die Ansaugöffnungen an verschiedenen Seiten der Ansaugleitung ausgebildet. Es ist vorstellbar, dass an der Ansaugleitung sowohl entlang einer in Fahrtrichtung der Querverteilerschnecke zugewandten Seite, entlang einer nach unten zum Untergrund und/oder entlang einer nach oben gerichteten Seite Ansaugöffnungen ausgebildet sind.

Vorteilhaft ist es, wenn die Absaugeinrichtung mindestens einen mit der Ansaugleitung verbundenen Lüfter aufweist, der beispielsweise im Bereich eines Außenbedienstands der Einbaubohle, insbesondere an einem dort zum Einstellen der Einbaubreite ausgebildeten Seitenschieber angeordnet ist. Vorzugsweise kann eine Lüfterleistung direkt am Außenbedienstand, beispielsweise mittels einer daran befestigten Steuervorrichtung, vom Bohlenbediener eingestellt werden. Entsprechend einer während des Einbaubetriebs vorliegenden Aerosolentwicklung kann der Bohlenbediener somit selbst die Lüfterleistung anpassen.

Vorstellbar wäre es, dass die Absaugeinrichtung mindestens einen im Bereich des Chassis des Straßenfertigers angeordneten Lüfter zum Absaugen der Aerosole mittels der an der Vorderseite des Bohlengrundkörpers ausgebildeten Ansaugleitung und/oder mindestens einen weiteren gesonderten Lüfter zum Absaugen der Aerosole mittels der an den Kanalblechen, Vorabstreifern und/oder am Außenbedienstand ausgebildeten Ansaugleitung aufweist, Insbesondere der letztgenannte Teil der Absaugeinrichtung könnte Kunden als Nachrüstset für große Bohlenbreiten angeboten werden. Hiermit ließe sich auch die Lüfterleistung gut über die gesamte Arbeitsbreite aufteilen, sodass damit Aerosole effektiv abgesaugt werden können. Der in der zweiten Alternative genannte Lüfter kann direkt am Außenbedienstand verbaut sein.

Vorzugsweise weist die Absaugeinrichtung ausgangsseitig mindestens eine Abluftleitung auf, die an einem Dachaufbau des Außenbedienstands der Einbaubohle zum Ausstoßen der abgesaugten Aerosole befestigt ist. Damit lässt sich der Aufbau der Absaugeinrichtung im Wesentlichen im Außenbereich der Einbaubohle ausführen, sodass auf eine über das Chassis des Straßenfertigers und über den Dachaufbau des Fahrerbedienstands aufgebaute Abluftführung ggf. verzichtet werden könnte.

Gemäß einer Ausführungsform umfasst die Absaugeinrichtung mindestens eine Aktivkohlefiltereinheit. Anhand dieser kann die abgesaugte aerosolhaltige Luft gereinigt werden. Damit können die Arbeitsbedingungen für die Bediener des Straßenfertigers qualitativ weiter verbessert werden. Die Aktivkohlefiltereinheit kann am Außenbedienstand ausgebildet sein, sodass die daran ausgestoßene Luft aus der Abluftleitung aerosolunbelastet ist.

Vorstellbar ist es, dass die Ansaugleitung des Kanalblechs, das am nächsten zum Chassis des Straßenfertigers positioniert ist, für eine Kopplung mit einer am Chassis des Straßenfertigers ausgebildeten Abzugsleitung konfiguriert ist. Damit lässt sich die Ansaugleitung mit einem am Chassis des Straßenfertigers installierten Absaugsystem verbinden.

Vorzugsweise weist die Absaugeinrichtung eine Sprühvorrichtung auf, die dazu ausgebildet ist, ein Fluid, beispielsweise Wasserdampf, oberhalb des Querverteilerkanals in die darin entstehende Aerosolbildung einzusprühen, um eine Konzentration der Aerosole zu reduzieren. Vorstellbar ist es, dass die Sprühvorrichtung mindestens eine Düse aufweist, die direkt an der Ansaugleitung angeordnet ist.

Gemäß einer Variante der Erfindung weist die Absaugeinrichtung mindestens eine Sensoreinheit auf, basierend auf deren Messergebnisse eine dynamische Lüfterdrehzahlanpassung durchführbar ist. Die Sensoreinheit kann einen Sensor aufweisen, der dazu ausgebildet ist, einen Aerosolgehalt in seiner Umgebung zu erfassen, welcher als IST-Wert kontinuierlich einem Regelkreis zum Durchführen der dynamischen Lüfterdrehzahlanpassung vorhaltbar ist. Eine dynamische Lüfterdrehzahlregelung kann insbesondere auf eine erfasste Temperatur des Einbauguts ansprechen.

Die Erfindung wird anhand von Ausführungsbeispielen gemäß den folgenden Figuren genauer erläutert. Es zeigen:
- Fig. 1: einen Straßenfertiger zum Herstellen einer Einbauschicht,
- Fig. 2: eine perspektivische Darstellung des Straßenfertigers mit einer Einbaubohle, die als Ausziehbohle vorliegt,
- Fig. 3: eine schematische Draufsicht einer Ausziehbohle für einen Straßenfertiger,
- Fig. 4: die Ausziehbohle aus Figur 3 mit seitlich ausgefahrenen Ausziehteilen,
- Fig. 5: eine Einbaubohle mit ausgefahrenen Ausziehteilen sowie daran seitlich befestigten Anbauteilen zum Herstellen einer gewünschten Arbeitsbreite,
- Fig. 6: einen Außenbedienstand einer Einbaubohle in schematischer Darstellung, und
- Fig. 7: schematisch dargestellte Positionierungsvarianten der Ansaugleitung an dessen Trägerkomponente.

Gleiche Komponenten sind in den Figuren durchgängig mit den gleichen Bezugszeichen versehen.

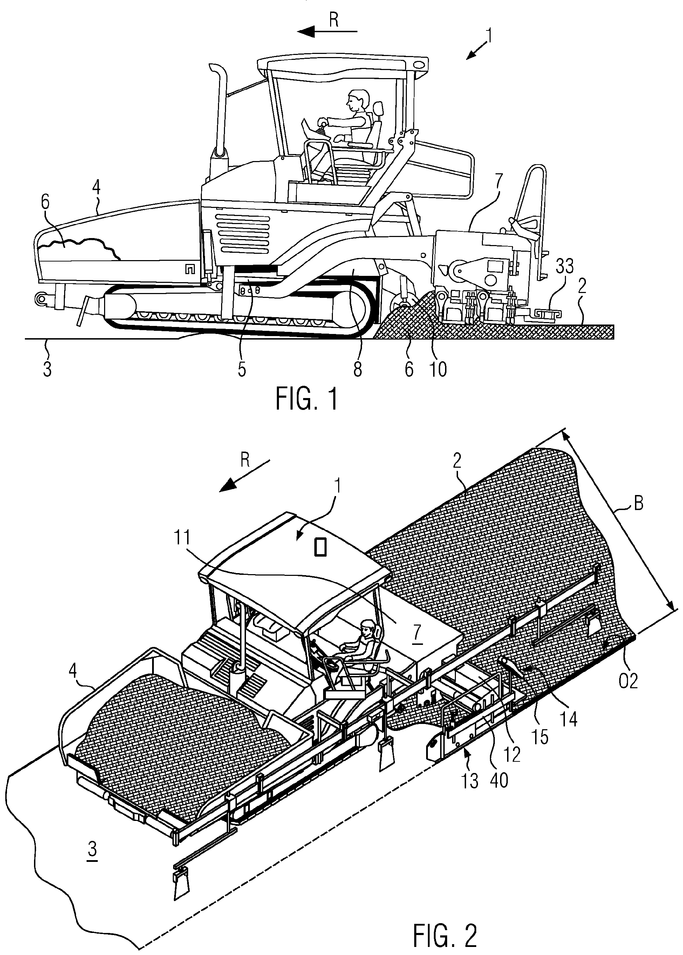

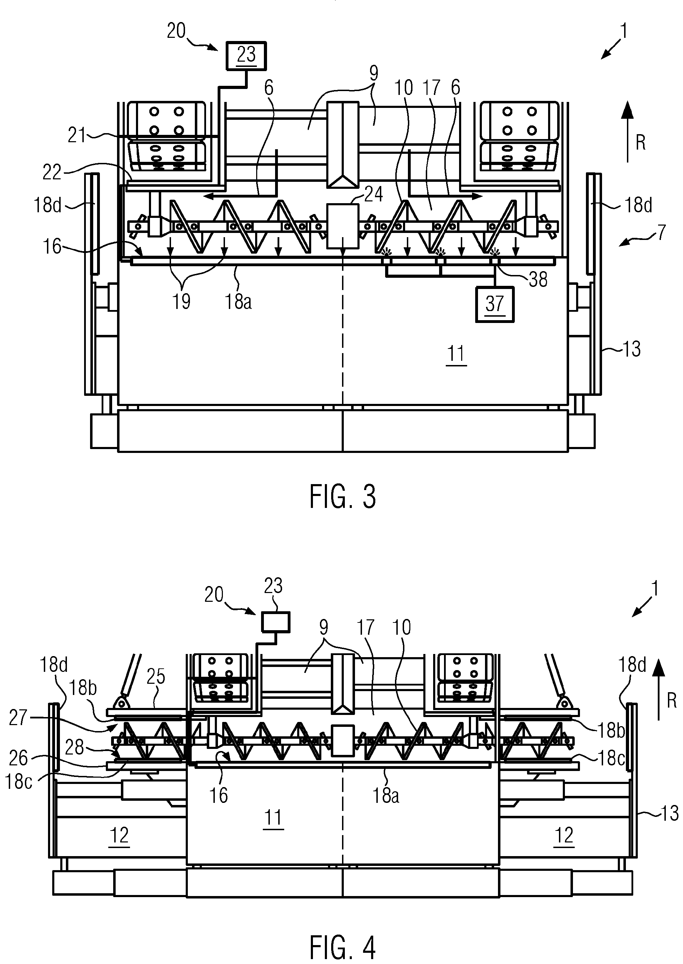

Figur 1 zeigt einen Straßenfertiger 1 zur Herstellung einer Einbauschicht 2 auf einem Untergrund 3. Der Straßenfertiger 1 weist in Fahrtrichtung R vorne einen Gutbunker 4 auf, aus welchem entgegen der Fahrtrichtung R des Straßenfertigers 1 mittels einer Längsfördervorrichtung 5 ein darin aufgenommenes Einbaumaterial 6 zu einer Einbaubohle 7 des Straßenfertigers 1 transportiert wird. Die Längsfördervorrichtung 5 ist innerhalb eines Chassis 8 des Straßenfertigers 1 angeordnet und weist ein Kratzerband 9 auf, das in Figur 3 gezeigt ist.

Vom Kratzerband 9 der Längsfördervorrichtung 5 wird das Einbaumaterial 6 an eine Querverteilerschnecke 10 übergeben, die vor der Einbaubohle 7 positioniert ist. Die Querverteilerschnecke 10 ist dazu ausgebildet, das Einbaumaterial 6 vor der Einbaubohle 7 zu verteilen.

Figur 2 zeigt den Straßenfertiger 1 in perspektivischer Darstellung. Die Einbaubohle 7 weist einen Bohlengrundkörper 11 sowie seitwärts ausfahrbare Ausziehteile 12 auf, um eine gewünschte Arbeitsbreite B der hergestellten Einbauschicht 2 einzustellen. Das in Figur 2 gezeigte linke Ausziehteil 12 verfügt über einen Seitenschieber 13 zum Einstellen der Arbeitsbreite B der neu verlegten Einbauschicht 2. Am Seitenschieber 13 ist ein Außenbedienstand 14 eingerichtet, der für einen Bohlenbediener eine Steuervorrichtung 15 aufweist. Der Seitenschieber 13 weist einen Seitenschieberträger 40 auf, der für den Aufbau des Außenbedienstands 14 einsetzbar ist. Am Au-ßenbedienstand 14 kann der Bohlenbediener den Betrieb der Einbaubohle 7 steuern und/oder überwachen. Insbesondere ist es zweckmäßig, dass der Bohlenbediener eine Querverteilung des Einbaumaterials 6 vor der Einbaubohle 7, d.h. auch vor den Ausziehteilen 12, überwachen kann.

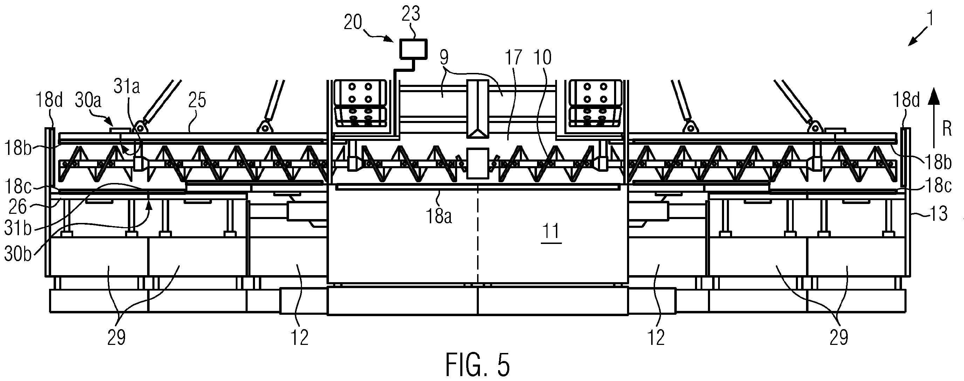

Figur 3 zeigt in schematischer Darstellung eine Draufsicht der Einbaubohle 7 des Straßenfertigers 1. Das mittels des Kratzerbands 9 vor dem Bohlengrundkörper 11 der Einbaubohle 7 abgeworfene Einbaumaterial 6 wird mittels der Querverteilerschnecke 10 entlang einer Vorderseite 16 des Bohlengrundkörpers 11 verteilt. Eine Rückwand 22 des Chassis 8 des Straßenfertigers 1 bildet zusammen mit der Vorderseite 16 des Bohlengrundkörpers 11 einen Querverteilerkanal 17 für die Querverteilerschnecke 10 aus. Dieser Querverteilerkanal 17 kann entsprechend einer Verbreiterung der Einbaubohle 7 seitwärts weiter ausgebaut werden. Dies zeigen die Figuren 4 und 5.

Weiter zeigt Figur 3, dass an der Vorderseite 16 des Bohlengrundkörpers 11 eine Ansaugleitung 18a ausgebildet ist. Die Ansaugleitung 18a weist eine Vielzahl an Ansaugöffnungen 19 auf, welche zum Absaugen von Aerosolen, die während des Einbaubetriebs innerhalb des Querverteilerkanals 17 entstehen, ausgebildet sind.

Die Ansaugleitung 18a ist in Figur 3 in Form einer Saugschiene direkt am Bohlengrundkörper 11 ausgebildet. Damit liegt sie in besonders kompakter Bauweise vor und ermöglicht eine unbeschränkte Sicht des Bohlenbedieners in den Querverteilerkanal 17.

Die Ansaugleitung 18a kann als Absaugende einer Absaugeinrichtung 20 ausgebildet sein, die am Chassis 8 des Straßenfertigers 1 verbaut ist. Die Ansaugleitung 18a könnte beispielsweise über eine Abluftführung 21 mit einem Lüfter 23 verbunden sein. Die Abluftführung 21 könnte auch einen anderen Verlauf haben, sich beispielsweise über eine zentrale Schneckenaufhängung 24 zum Lüfter 23 erstrecken.

Schließlich zeigt Figur 3 schematisch eine Sprühvorrichtung 37 mit einer Düse 38 zum Benebeln der Aerosolbildung innerhalb des Querverteilerkanals 17. Die Sprühvorrichtung 37 kann zum Herstellen von Wasserdampf ausgebildet sein.

Figur 4 zeigt die Einbaubohle 7 in schematischer Draufsichtdarstellung mit ausgefahrenen Ausziehteilen 12. Anhand einer solchen Verbreiterung der Einbaubohle 7 kann eine größere Arbeitsbreite B für die neu hergestellte Einbauschicht 2 hergestellt werden. Figur 4 zeigt, dass der Querverteilerkanal 17 seitwärts, über den Bohlengrundkörper 11 hinaus erweitert ist. Entlang des verbreiterten Querverteilerkanals 17 kann das von dem Kratzerband 9 abgeworfene Einbaumaterial 6 bis zu den äußeren Seiten der Ausziehteile 12 transportiert werden. Die innerhalb des Querverteilerkanals 17 in Figur 4 angeordnete Querverteilerschnecke 10 ist ebenfalls erweitert.

Der vor der Einbaubohle 7 eingerichtete Querverteilerkanal 17 ist an seinen äußeren Bereichen quer zur Fahrtrichtung R mittels an dem Chassis 8 des Straßenfertigers 1 abgestützten Kanalblechen 25 und mittels seitlich des Bohlengrundkörpers 11 befestigten Vorabstreifern 26 gebildet. Je nach eingestellter Arbeitsbreite B können die Kanalbleche 25 sowie die Vorabstreifer 26 seitwärts weiter ausgebaut werden, um den Querverteilerkanal 17 zu verlängern. Das gleiche gilt sinngemäß für die Querverteilerschnecke 10.

Außerdem zeigt Figur 4, dass die an der Vorderseite 16 des Bohlengrundkörpers 11 ausgebildete Ansaugleitung 18a um weitere Ansaugleitungen 18b, 18c erweitert ist, um Aerosole aus dem Querverteilerkanal 17 abzusaugen. Die Ansaugleitungen 18a, 18b, 18c sind damit gemäß Figur 4 entlang des Querverteilerkanals 17 an einer der Querverteilerschnecke 10 zugewandten Seite 27 der Kanalbelche 25, an einer der Querverteilerschnecke 10 zugewandten Seite 28 der Vorabstreifer 26 und an der Vorderseite 16 des Bohlengrundkörpers 11 ausgebildet.

Als integraler Bestandteil an den Kanalblechen 25 und den Vorabstreifern 26 ermöglichen insbesondere die Ansaugleitungen 18b, 18c, dass der Bohlenbediener eine Sicht in den Querverteilerkanal 17 ohne Sichtbarriere hat.

Figur 5 zeigt die Einbaubohle 7 mit ausgefahrenen Ausziehteilen 12 und seitlich daran befestigten Anbauteilen 29 zum Herstellen einer sehr großen Arbeitsbreite B für die Einbauschicht 2. Figur 5 zeigt, dass der Querverteilerkanal 17 entlang des Bohlengrundkörpers 11, der Ausziehteile 12 sowie entlang der daran befestigten Anbauteile 29 quer zur Fahrtrichtung R ausgebildet ist. Entsprechend der Arbeitsbreite B wurden dabei weitere Kanalbleche 25 sowie Vorabstreifer 26 montiert, um den Querverteilerkanal 17 weiter auszubauen.

Ferner zeigt Figur 5, dass die an den Kanalblechen 25 und den Vorabstreifern 26 ausgebildeten Ansaugleitungen 18b, 18c erweitert sind, um entlang der gesamten Erstreckung des Querverteilerkanals 17 Aerosole absaugen zu können. An Trennstellen 30a der Kanalbleche 25 und an Trennstellen 30b der Vorabstreifer 26 sind Koppelenden 31 der Ansaugleitungen 18b, 18c miteinander verbunden.

Die Figuren 3 bis 5 zeigen eine Ansaugleitung 18d, die am Seitenschieber 13 des Außenbedienstands 14 angeordnet ist. Die Ansaugleitung 18d kann als Bestandteil einer gesondert für den Außenbedienstand 14 vorgesehenen Absaugeinrichtung ausgebildet sein.

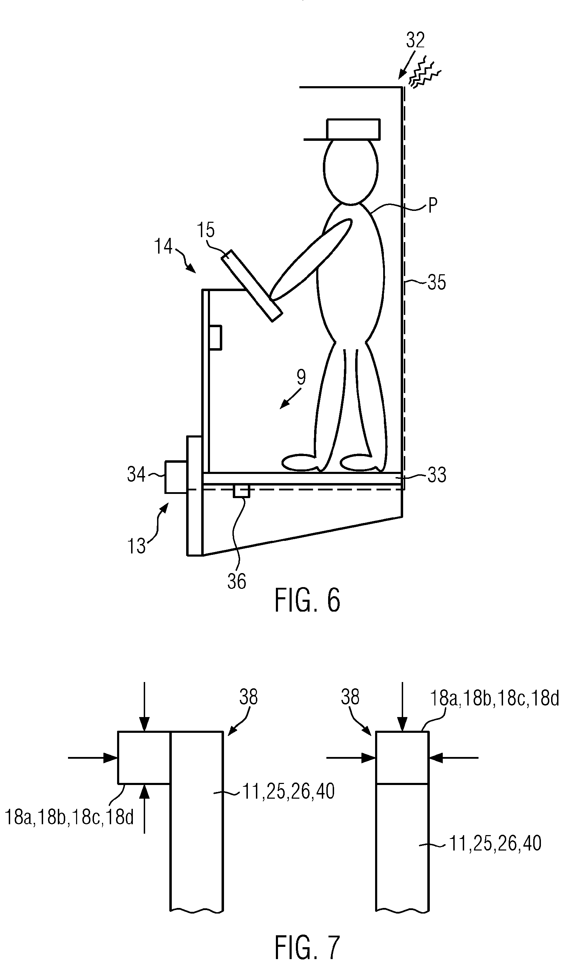

Figur 6 zeigt in schematischer Darstellung den Außenbedienstand 14 aus Figur 2 mit einem Dachaufbau 32 für einen Bohlenbediener P. Der Außenbedienstand 14 zeigt, dass der Bohlenbediener P auf einem Laufsteg 33 steht, der hinter der Einbaubohle 7 sich über die Einbauschicht 2 erstreckt. Der Laufsteg 33 ist auch in Figur 1 gezeigt. Am Seitenschieber 13 ist ein Lüfter 34 vorgesehen. Der Lüfter 34 kann mit den Ansaugleitungen 18b, 18c, 18d verbunden sein, um aus dem Querverteilerkanal 17 Aerosole abzusaugen. Ferner zeigt Figur 6, dass vom Lüfter 34 eine Abluftleitung 35, die als gestrichelte Linie in Figur 6 schematisch dargestellt ist, oberhalb des Dachaufbaus 32 die abgesaugten Aerosole ausstößt. Ferner zeigt Figur 6 eine Aktivkohlefiltereinheit 36 zum Reinigen der aus dem Querverteilerkanal 17 abgesaugten Aerosole.

Die unmittelbar am Seitenschieber 13 des Außenbedienstands 14, am Grundbohlenkörper 11, den Kanalbelchen 25 und/oder Vorabstreifern 26 integral verbauten Ansaugleitungen 18a, 18b, 18c, 18d bilden eine vorteilhafte Einlaufgeometrie für die Absaugeinrichtung 20 am Straßenfertiger 1 aus. Insbesondere deren kompakte, an den bestehenden Strukturen reduzierte Bauweise ermöglicht es, dass der Bohlenbediener einwandfrei Sicht in den Querverteilerkanal 17 erhält und zwar unabhängig davon, wie weit dieser vor der Einbaubohle 7 ausgebaut ist. Die integrale Bauweise der Ansaugleitungen 18a, 18b, 18c, 18d bietet insgesamt einen reduzierten Herstellungssowie Montageaufwand am Straßenfertiger 1.

Figur 7 zeigt schematisch, dass die Ansaugleitungen 18a, 18b, 18c, 18d im montierten Zustand gemäß der linken Darstellung entweder vordergründig, sprich als sichtbares Anbauteil an den jeweiligen Trägerkomponenten (d.h. an den Kanalblechen, den Vorabstreifern, an dem Bohlengrundkörper 11 und/oder am Seitenschieberträger 40) oder gemäß der rechten Darstellung aus Figur 7 im Aufbau der Trägerkomponenten integriert ausgebildet sein können.

Die Ansaugleitungen 18a, 18b, 18c, 18d sind in Figur 7 auf einem Höhenniveau einer oberen Kante 28 der Kanalbleche 25 und Vorabstreifer 26 angeordnet. Die Ansaugleitungen 18a, 18b, 18c, 18d bilden somit zusammen einen den Querverteilerkanal 17 im Wesentlichen umlaufenden Rahmen aus, um die im Querverteilerkanal 17 entstehenden Aerosole abzusaugen. Die in Figur 7 in Richtung der Ansaugleitungen 18a, 18b, 18c, 18d zeigenden Pfeile zeigen, an welchen Seiten das Absaugen der Aerosole möglich ist.

## Patentansprüche

1. Straßenfertiger (1), umfassend eine Einbaubohle (7) zum Herstellen einer Einbauschicht (2) aus einem Einbaumaterial (6), einen Gutbunker (4) zur Aufnahme des Einbaumaterials (6), eine Längsfördervorrichtung (5), die dazu ausgebildet ist, das Einbaumaterial (6) aus dem Gutbunker (4) entgegen einer Fahrtrichtung (R) des Straßenfertigers (1) zur Einbaubohle (7) zu transportieren, eine Querverteilerschnecke (10), die dazu ausgebildet ist, das mittels der Längsfördervorrichtung (5) zur Einbaubohle (7) transportierte Einbaumaterial (6) quer zur Fahrtrichtung (R) vor der Einbaubohle (7) zu verteilen, wobei die Querverteilerschnecke (10) in Fahrtrichtung (R) vor einem Bohlengrundkörper (11) der Einbaubohle (7) innerhalb eines zur Querverteilung des Einbaumaterials (6) vor der Einbaubohle (7) eingerichteten Querverteilerkanals (17) gelagert ist, und mindestens eine Absaugeinrichtung (20) mit mindestens einer daran eingangsseitig ausgebildeten Ansaugleitung (18b, 18c), die dazu konfiguriert ist, bei der Querverteilung des Einbaumaterials (6) entstehende Aerosole aus Bereichen entlang des Querverteilerkanals (17) abzusaugen, **dadurch gekennzeichnet, dass** der Querverteilerkanal (17) zumindest abschnittweise mittels an einem Chassis (8) des Straßenfertigers (1) abgestützten Kanalblechen (25) und mittels seitlich des Bohlengrundkörpers (11) der Einbaubohle (7) befestigten Vorabstreifern (26) quer zur Fahrtrichtung (R) vor der Einbaubohle (7) gebildet ist, und dass die Ansaugleitung (18b, 18c) zumindest abschnittsweise an den Kanalblechen (25) des Querverteilerkanals (17) und/oder zumindest abschnittsweise an den Vorabstreifern (26) des Querverteilerkanals (17) angebracht ist.

2. Straßenfertiger nach Anspruch 1, **dadurch gekennzeichnet, dass** die Ansaugleitung (18b, 18c) eine sich quer zur Fahrtrichtung (R) erstreckende Rohrleitung ist und/oder die Ansaugleitung (18b, 18c) in Form eines Vierkantrohrs ausgebildet ist.

3. Straßenfertiger nach Anspruch 1 oder 2, **dadurch gekennzeichnet, dass** die Ansaugleitung (18b, 18c) eine Wand aufweist, die zumindest abschnittsweise als integraler Bestandteil der Kanalbleche (25) und/oder der Vorabstreifer (26) ausgebildet ist.

4. Straßenfertiger nach einem der vorangehenden Ansprüche, **dadurch gekennzeichnet, dass** die Ansaugleitung (18b, 18c) zumindest abschnittsweise entlang einer oberen Kante der Kanalbleche (26) und/oder entlang einer oberen Kante der Vorabstreifer (26) ausgebildet ist.

5. Straßenfertiger nach einem der vorangehenden Ansprüche, **dadurch gekennzeichnet, dass** die an den Kanalblechen (25) und/oder an den Vorabstreifern (26) ausgebildete Ansaugleitung (18b, 18c) den Querverteilerkanal (17) von oben betrachtet im Wesentlichen unbedeckt lässt.

6. Straßenfertiger nach einem der vorangehenden Ansprüche, **dadurch gekennzeichnet, dass** die Ansaugleitung (18b, 18c) entlang des Querverteilerkanals (17) eine zur Fahrtrichtung (R) quergerichtete Abluftführung ausbildet.

7. Straßenfertiger nach einem der vorangehenden Ansprüche, **dadurch gekennzeichnet, dass** die Ansaugleitung (18b, 18c) mehrere miteinander verbindbare Leitungsabschnitte aufweist, deren Koppelenden (31a, 31b) im Bereich von Trennstellen (30a, 30b) nebeneinander befestigter Kanalbleche (25) und/oder Vorabstreifer (26) ausgebildet sind.

8. Straßenfertiger nach Anspruch 7, **dadurch gekennzeichnet, dass** benachbarte Kanalbleche (25) und/oder Vorabstreifer (26) anhand der Koppelenden (31a, 31b) der Ansaugleitung (18b, 18c) zusammengebaut sind.

9. Straßenfertiger nach einem der vorangehenden Ansprüche, **dadurch gekennzeichnet, dass** die Ansaugleitung (18b, 18c) mehrere Durchbrüche als Ansaugöffnungen (19) aufweist.

10. Straßenfertiger nach Anspruch 9, **dadurch gekennzeichnet, dass** die Ansaugleitung (18b, 18c) mindestens einen Schließmechanismus zum Öffnen und Schließen zumindest einer der daran ausgebildeten Ansaugöffnungen (19) aufweist und/oder die Ansaugöffnungen (19) an verschiedenen Seitenwänden der Ansaugleitung (18b, 18c) ausgebildet sind.

11. Straßenfertiger nach einem der vorangehenden Ansprüche, **dadurch gekennzeichnet, dass** die Ansaugleitung (18d) zumindest abschnittsweise an einem Außenbedienstand (14) der Einbaubohle (7) angebracht ist, wobei die Ansaugleitung (18d) vorzugsweise eine Wand aufweist, die zumindest abschnittsweise als integraler Bestandteil einer Komponente des Au-ßenbedienstands (14) ausgebildet ist, wobei die Ansaugleitung (18d) vorzugsweise zumindest abschnittsweise entlang einer oberen Kante eines Seitenschieberträgers (40) des Au-ßenbedienstands (14) ausgebildet ist, und wobei die am Außenbedienstand (14) ausgebildete Ansaugleitung (18d) vorzugsweise den Querverteilerkanal (17) von oben betrachtet im Wesentlichen unbedeckt lässt.

12. Straßenfertiger nach Anspruch 11, **dadurch gekennzeichnet, dass** die Absaugeinrichtung (20) mindestens einen mit der Ansaugleitung (18b, 18c, 18d) verbundenen Lüfter (34) aufweist, der im Bereich des Außenbedienstands (14) der Einbaubohle (7) an einem dort zum Einstellen der Arbeitsbreite ausgebildeten Seitenschieber (13) angeordnet ist.

13. Straßenfertiger nach einem der Ansprüche 11 oder 12, **dadurch gekennzeichnet, dass** die Absaugeinrichtung (20) ausgangsseitig mindestens eine Abluftleitung (35) zum Ausstoßen der aus dem Querverteilerkanal (17) abgesaugten Aerosole aufweist, die an einem Dachaufbau (32) des Außenbedienstands (14) der Einbaubohle (7) befestigt ist.

14. Straßenfertiger nach einem der vorangehenden Ansprüche, **dadurch gekennzeichnet, dass** die Absaugeinrichtung (20) mindestens eine Aktivkohlefiltereinheit (36) aufweist.

15. Straßenfertiger nach einem der vorangehenden Ansprüche, **dadurch gekennzeichnet, dass** die Ansaugleitung (18b) des Kanalblechs (25), das am nächsten zum Chassis (8) des Stra-ßenfertigers (1) positioniert ist, für eine Kopplung mit einer am Chassis (8) des Straßenfertigers (1) vorgesehenen Abzugsleitung (22) ausgebildet ist.

16. Straßenfertiger nach einem der vorangehenden Ansprüche, **dadurch gekennzeichnet, dass** die Absaugeinrichtung (20) mindestens eine Sprühvorrichtung (37) zum Einsprühen eines Fluids in den Querverteilerkanal (17) aufweist, wobei die Sprühvorrichtung (37) mindestens eine Düse (38) umfasst, die an der Ansaugleitung (18b, 18c, 18d) befestigt ist.

17. Straßenfertiger nach einem der vorangehenden Ansprüche, **dadurch gekennzeichnet, dass** die Ansaugleitung (18a) zumindest abschnittsweise an einer der Querverteilerschnecke (10) zugewandten Vorderseite (16) des Bohlengrundkörpers (11) angeordnet ist, wobei die Ansaugleitung (18a) vorzugsweise eine Wand aufweist, die zumindest abschnittsweise als integraler Bestandteil der Vorderseite (16) des Bohlengrundkörpers (11) ausgebildet ist, und wobei weiter vorzugsweise die an der Vorderseite (16) des Grundbohlenkörpers (11) ausgebildete Ansaugleitung (18a) den Querverteilerkanal (17) von oben betrachtet im Wesentlichen unbedeckt lässt.

## Claims

1. Road finishing machine (1), comprising a screed (7) for producing a paving layer (2) from a paving material (6), a material bunker (4) for receiving the paving material (6), a longitudinal conveying device (5) which is configured to transport the paving material (6) from the material bunker (4) against a direction of travel (R) of the road finishing machine (1) to the screed (7), a transverse distributor auger (10) which is configured to distribute the paving material (6) transported to the screed (7) by means of the longitudinal conveying device (5) transversely to the direction of travel (R) in front of the screed (7), wherein the transverse distributor auger (10) is mounted, in the direction of travel (R), in front of a screed basic body (11) of the screed (7) within a transverse distributor channel (17) arranged for the transverse distribution of the paving material (6) in front of the screed (7), and at least one suction device (20) with at least one intake line (18b, 18c) formed thereat at the inlet side which is configured to suck off aerosols formed during the transverse distribution of the paving material (6) from regions along the transverse distributor channel (17), **characterized in that** the transverse distributor channel (17) is formed transversely to the direction of travel (R) in front of the screed (7) at least in sections by means of channel plates (25) supported at a chassis (8) of the road finishing machine (1), and by means of pre-scrapers (26) attached laterally of a screed basic body (11) of the screed (7), wherein the intake line (18b, 18c) is arranged, at least in sections, at the channel plates (25) of the transverse distributor channel (17) and/or at least in sections at the pre-scrapers (26) of the transverse distributor channel (17).

2. Road finishing machine according to claim 1, **characterized in that** the intake line (18b, 18c) is a pipeline extending transversely to the direction of travel (R), and/or the intake line (18b, 18c) is formed in the form of a rectangular pipe.

3. Road finishing machine according to claim 1 or 2, **characterized in that** the intake line (18b, 18c) includes a wall which is formed, at least in sections, as an integral part of the channel plates (25) and/or the pre-scrapers (26).

4. Road finishing machine according to one of the preceding claims, **characterized in that** the intake line (18b, 18c) is formed, at least in sections, along an upper edge of the channel plates (26) and/or along an upper edge of the pre-scrapers (26).

5. Road finishing machine according to one of the preceding claims, **characterized in that** the intake line (18b, 18c) formed at the channel plates (25) and/or at the pre-scrapers (26) is dimensioned such that the transverse distributor channel (17) is essentially uncovered, seen from above.

6. Road finishing machine according to one of the preceding claims, **characterized in that** the intake line (18b, 18c) forms an exhaust air guide oriented transversely to the direction of travel (R) along the transverse distributor channel (17).

7. Road finishing machine according to one of the preceding claims, **characterized in that** the intake line (18b, 18c) includes a plurality of interconnectable line sections whose coupling ends (31a, 31b) are formed in the region of separating points (30a) of channel plates (25) attached one next to the other, and/or in the region of separating points (30b) of pre-scrapers (26).

8. Road finishing machine according to claim 7, **characterized in that** adjacent channel plates (25) and/or pre-scrapers (26) are assembled by the coupling ends (31a, 31b) of the intake line (18b, 18c).

9. Road finishing machine according to one of the preceding claims, **characterized in that** the intake line (18b, 18c) includes a plurality of passages as intake openings (19).

10. Road finishing machine according to claim 9, **characterized in that** the intake line (18b, 18c) includes at least one closing mechanism for opening and closing at least one of the intake openings (19) formed thereat, and/or the intake openings (19) are formed at different side walls of the intake line (18b, 18c).

11. Road finishing machine according to one of the preceding claims, **characterized in that** the intake line (18d) is arranged, at least in sections, at an external control platform (14) of the screed (7), where the intake line (18d) particularly includes a wall which is formed, at least in sections, as an integral part of a component of the external control platform (14), wherein particularly the intake line (18d) is formed, at least in sections, along an upper edge of a side pusher support (40) of the external control platform (14), and wherein particularly the intake line (18d) formed at the external control platform is dimensioned such that the transverse distributor channel (17) is essentially uncovered, seen from above.

12. Road finishing machine according to claim 11, **characterized in that** the suction device (20) includes at least one fan (34) connected with the intake line (18b, 18c, 18d), the fan being arranged in the region of the external control platform (14) of the screed (7) at a side pusher (13) formed thereat for setting the working width.

13. Road finishing machine according to claim 11 or 12, **characterized in that** the suction device (20) includes, at the outlet side, at least one exhaust air line (35) for ejecting the aerosols sucked off from the transverse distributor channel (17) which is attached to a roof structure (32) of the external control platform (14) of the screed (7).

14. Road finishing machine according to one of the preceding claims, **characterized in that** the suction device (20) includes at least one activated-carbon filter unit (36).

15. Road finishing machine according to one of the preceding claims, **characterized in that** the intake line (18b) of the channel plate (25) which is positioned closest to the chassis (8) of the road finishing machine (1) is configured for coupling with a vent line (22) provided at the chassis (8) of the road finishing machine (1).

16. Road finishing machine according to one of the preceding claims, **characterized in that** the suction device (20) includes at least one spray device (37) for spraying a fluid into the transverse distributor channel (17), wherein the spray device (37) comprises at least one nozzle (38) which is attached to the intake line (18b, 18c, 18d).

17. Road finishing machine according to one of the preceding claims, **characterized in that** the intake line (18a) is arranged, at least in sections, at a front side (16) of the screed basic body (11) facing the transverse distributor auger (10), wherein particularly the intake line (18a) includes a wall which is formed, at least in sections, as an integral part of the front side (16) of the screed basic body (11), and wherein further particularly the intake line (18a) formed at the front side (16) of the screed basic body (11) is dimensioned such that the transverse distributor channel (17) is essentially uncovered, seen from above.

## Revendications

1. Finisseur d'asphalte (1), comprenant une poutre lisseuse (7) pour fabriquer une couche de pavage (2) à partir d'un matériau de pavage (6), une trémie (4) pour recevoir le matériau de pavage (6), un dispositif de transport longitudinal (5) conçu pour transporter le matériau de pavage (6) provenant de la trémie (4) en sens contraire à la direction de déplacement (R) du finisseur d'asphalte (1) jusqu'à la poutre lisseuse (7), une vis de distribution transversale (10) qui est conçue pour distribuer le matériau de pavage (6) transporté jusqu'à la poutre lisseuse (7) au moyen du dispositif de transport longitudinal (5) transversalement à la direction de déplacement (R) devant la poutre lisseuse (7), dans lequel la vis de distribution transversale (10) est montée devant un corps de base de poutre (11) de la poutre lisseuse (7) dans la direction de déplacement (R), à l'intérieur d'un canal de distribution transversal (17) pour la distribution transversale du matériau de pavage (6) agencé devant la poutre lisseuse (7), et au moins un dispositif d'aspiration (20) avec au moins une conduite d'aspiration (18b, 18c) formée du côté entrée, qui est configuré pour aspirer les aérosols provenant de zones situées le long du canal de distribution transversal (17) lors de la distribution transversale du matériau de pavage (6), **caractérisé en ce que** le canal de distribution transversal (17) est constitué au moins par sections au moyen de tôles de canal (25) supportées sur un châssis (8) du finisseur d'asphalte (1) et au moyen de racleurs avant (26) fixés latéralement sur le côté du corps de base de poutre (11) de la poutre lisseuse (7), transversalement à la direction de déplacement (R) de la poutre lisseuse (7), et **en ce que** la conduite d'aspiration (18b, 18c) est fixée au moins par sections aux tôles de canal (25) et/ou aux racleurs avant (26) du canal de distribution transversal (17).

2. Finisseur d'asphalte selon la revendication 1, **caractérisé en ce que** la conduite d'aspiration (18b, 18c) est un tuyau s'étendant transversalement à la direction de déplacement (R) et/ou est conformée comme un tube carré.

3. Finisseur d'asphalte selon la revendication 1 ou 2, **caractérisé en ce que** la conduite d'aspiration (18b, 18c) comporte une paroi faisant au moins par sections partie intégrante des tôles de canal (25) et/ou des racleurs avant (26).

4. Finisseur d'asphalte selon l'une des revendications précédentes, **caractérisé en ce que** la conduite d'aspiration (18b, 18c) est conformée au moins par sections le long d'un bord supérieur des tôles de canal (25) et/ou le long d'un bord supérieur des racleurs avant (26).

5. Finisseur d'asphalte selon l'une des revendications précédentes, **caractérisé en ce que** la conduite d'aspiration (18b, 18c) formée sur les tôles de canal (25) et/ou sur les racleurs avant (26) laisse le canal de distribution transversal (17) essentiellement découvert vu d'en haut.

6. Finisseur d'asphalte selon l'une des revendications précédentes, **caractérisé en ce que** la conduite d'aspiration (18b, 18c) forme un conduit d'évacuation d'air dirigé transversalement à la direction de déplacement (R) le long du canal de distribution transversal (17).

7. Finisseur d'asphalte selon l'une des revendications précédentes, **caractérisé en ce que** la conduite d'aspiration (18b, 18c) comporte plusieurs sections de conduite pouvant être connectées entre elles, dont les extrémités d'accouplement (31a, 31b) sont constituées dans la zone de points de désaccouplement (30a, 30b) de tôles de canal (25) et/ou de racleurs avant (26) fixés les uns à côté des autres.

8. Finisseur d'asphalte selon la revendication 7, **caractérisé en ce que** les tôles de canal (25) et/ou les racleurs avant (26) adjacents sont assemblés via les extrémités d'accouplement (31a, 31b) de la conduite d'aspiration (18b, 18c).

9. Finisseur d'asphalte selon l'une des revendications précédentes, **caractérisé en ce que** la conduite d'aspiration (18b, 18c) comporte plusieurs percements comme ouvertures d'aspiration (19).

10. Finisseur d'asphalte selon la revendication 9, **caractérisé en ce que** la conduite d'aspiration (18b, 18c) comporte au moins un mécanisme de fermeture pour ouvrir et fermer au moins l'une des ouvertures d'aspiration (19) qui y sont formées et/ou **en ce que** les ouvertures d'aspiration (19) sont formées sur différentes parois latérales de la conduite d'aspiration (18b, 18c).

11. Finisseur d'asphalte selon l'une des revendications précédentes, **caractérisé en ce que** la conduite d'aspiration (18d) est fixée au moins par sections à un poste de commande externe (14) de la poutre lisseuse (7), dans lequel la conduite d'aspiration (18d) comporte de préférence une paroi faisant au moins par sections partie intégrante d'un composant du poste de commande externe (14), dans lequel la conduite d'aspiration (18d) est de préférence constituée au moins par sections le long d'un bord supérieur d'un support coulissant latéral (40) du poste de commande externe (14), et dans lequel la conduite d'aspiration (18d) formée sur le poste de commande externe (14) laisse de préférence le canal de distribution transversal (17) essentiellement découvert vu d'en haut.

12. Finisseur d'asphalte selon la revendication 11, **caractérisé en ce que** le dispositif d'aspiration (20) comporte au moins un ventilateur (34) connecté à la conduite d'aspiration (18b, 18c, 18d), agencé dans la zone du poste de commande externe (14) de la poutre lisseuse (7) sur une glissière latérale (13) conçue pour le réglage de la largeur de travail.

13. Finisseur d'asphalte selon l'une des revendications 11 et 12, **caractérisé en ce que** le dispositif d'aspiration (20) comporte au moins une conduite d'évacuation d'air (35) côté sortie pour expulser les aérosols aspirés dans le canal de distribution transversal (17), qui est fixée à une structure de toit (32) du poste de commande externe (14) de la poutre lisseuse (7).

14. Finisseur d'asphalte selon l'une des revendications précédentes, **caractérisé en ce que** le dispositif d'aspiration (20) comporte au moins une unité de filtre à charbon actif (36).

15. Finisseur d'asphalte selon l'une des revendications précédentes, **caractérisé en ce que** la conduite d'aspiration (18b) de la tôle de canal (25) positionnée au plus près du châssis (8) du finisseur d'asphalte (1) est conçue pour être couplée à une conduite d'aspiration (22) pourvue sur le châssis (8) du finisseur d'asphalte (1) .

16. Finisseur d'asphalte selon l'une des revendications précédentes, **caractérisé en ce que** le dispositif d'aspiration (20) comporte au moins un dispositif d'aspersion (37) pour asperger un fluide dans le canal de distribution transversal (17), dans lequel le dispositif d'aspersion (37) comprend au moins une buse (38) qui est montée sur la conduite d'aspiration (18b, 18c, 18d).

17. Finisseur d'asphalte selon l'une des revendications précédentes, **caractérisé en ce que** la conduite d'aspiration (18a) est agencée au moins par sections sur une face avant (16) du corps de base de la poutre (11) tournée vers la vis de distribution transversale (10), dans lequel la conduite d'aspiration (18a) comporte de préférence une paroi faisant au moins par sections partie intégrante du côté avant (16) du corps de base de la poutre (11), et dans lequel de préférence encore la conduite d'aspiration (18a) formée sur le côté avant (16) du corps de base de la poutre (11) laisse le canal de distribution transversal (17) essentiellement découvert vu d'en haut.
